# EUROPÄISCHE PATENTSCHRIFT

(11) **EP 0 638 794 B1**
(45) Veröffentlichungstag und Bekanntmachung des Hinweises auf die Patenterteilung: **15.04.1998**
(21) Anmeldenummer: 94112340.8
(22) Anmeldetag: 08.08.1994
(51) Int. Cl.: G01M 5/00

(54) **Verfahren und Einrichtung zum Prüfen der Stand- und Biegefestigkeit von Masten**
Procedure and device for testing the attachment and bending strength of poles
Procédé et dispositif d'essai de la fixation et de la résistance à la flexion de poteaux

(30) Priorität: 14.08.1993 DE 9312178 U; 19.03.1994 DE 4409481
(43) Veröffentlichungstag der Anmeldung: 15.02.1995
(73) Patentinhaber: Roch, Mathias, 23923 Herrnburg (DE); Roch, Oliver, 23623 Ahrensbök (DE)
(72) Erfinder: Roch, Mathias, 23923 Herrnburg (DE); Roch, Oliver, 23623 Ahrensbök (DE)
(74) Vertreter: Wilcken, Thomas, Dipl.-Ing.

(56) Entgegenhaltungen:
- US-A- 5 212 654
- IEEE TRANSACTIONS ON POWER DELIVERY, Bd.5, Nr.3, Juli 1990, NEW YORK US Seiten 1474 - 1483, XP000147670 S.G. KRISHNASAMY U.A. 'TESTING OF LATTICE TOWERS FOR ONTARIO HYDRO TRANSMISSION LINE REFURBISHMENT PROGRAM'
- ELEKTROTECHNIK UND INFORMATIONSTECHNIK, Bd.106, Nr.9, 1989, WIEN AT Seiten 347 - 352, XP000070394 F.H. ÖVE U.A. 'VERGLEICH DER STATISCHEN UND DYNAMISCHEN FESTIGKEIT VON PORTALEN IN HOCHSPANNUNGSANLAGEN BEI ABGESPANNTEN SEILEN'
- JOURNAL OF TESTING AND EVALUATION., Bd.16, Nr.2, März 1988, PHILADELPHIA US Seiten 214 - 221 E. GEORGE STERN 'STRENGHT AND STIFFNESS OF METAL RAILING SYSTEMS AND RAILS FOR BUILDINGS'
- MEASUREMENT AND CONTROL, Bd.16, Nr.9, September 1983, LONDON GB Seiten 329 - 330 'TOWER TESTING PROJECT FOR INDIA'

## Beschreibung

Die Erfindung betrifft ein Verfahren zum Prüfen der Stand- und Biegefestigkeit von stehend verankerten Masten, bei dem der jeweils zu prüfende Mast einem variablen Biegemoment ausgesetzt wird, indem er mit einer oberhalb seiner Verankerung eingeleiteten und im Verlauf des Prüfvorganges ansteigenden Kraft belastet wird, deren gemessener Wert und Verlauf zur Bestimmung der Festigkeit des Mastes herangezogen werden.

Weiterhin betrifft die Erfindung eine insbesondere zur Durchführung eines solchen Verfahrens geeignete Einrichtung zum Prüfen der Stand- und Biegefestigkeit von stehend verankerten Masten, bestehend aus einer Krafteinheit, mit der eine ansteigende Kraft in den Mast oberhalb seiner Verankerung einleitbar und der Mast mit einem Biegemoment belastbar ist, aus einem Kraftsensor zum Messen dieser Kraft, deren Höhe und Verlauf zur Bestimmung der Festigkeit des Mastes auswertbar ist, aus einem oberhalb der Mastverankerung gegen den Mast zur Anlage bringbaren Wegsensor zum Messen der aufgrund des Biegemomentes auftretenen seitlichen Auslenkung des Mastes und aus einer Auswerteschaltung.

Masten werden zu vielerlei Zwecken eingesetzt, so beispielsweise als Träger von Verkehrsschildern, Ampeln, Leuchten, Freileitungen und dergleichen, d. h. im wesentlichen in einem Bereich, in dem diese Masten recht aggressiven Umwelteinflüssen wie Bodenfeuchtigkeit, Witterungseinflüssen, Emissionen aus Verkehr und Industrie, Hundeexkrementen u. ä. ausgesetzt sind. Diese Einflüsse können an den Masten bzw. deren Fundamenten zu Schäden durch Korrosion führen, die zur Minderung der Stand- und/oder Biegefestigkeit führen können, mit dem erheblichen Risiko, daß derart angegriffene Masten im Extremfall abknicken und dadurch schwere Unfälle verursachen können. Um solche Risiken zu vermeiden, sollten die Masten daher in vorgegebenen Zeitintervallen auf ihre Stand- und Biegefestigkeit überprüft werden.

Ein mögliches Prüfungsverfahren besteht beispielsweise in der Messung der Restwanddicke des Mastes, was mit Hilfe des Impuls-Echo-Verfahrens, d. h. durch Einleiten von Ultraschall im gefährdeten Bereich des Mastes durchgeführt wird. Dieses Verfahren weist verschiedene Mängel auf. So sind zu seiner Anwendung aufwendige Arbeiten notwendig, wie Entrosten des Mastes an der Prüfstelle, zu welchem Zweck unter Umständen Betonplatten abgehoben, umgebender Asphalt beseitigt und danach wieder erneuert oder auch Erdreich bewegt werden muß. Abgesehen davon können damit Störungen des Verkehrsflusses einhergehen, die den Aufwand weiter vergrößern. Dieses Verfahren kann daher nur zur stichprobenhaften Kontrolle angewendet werden. Weiter ist es nachteilig, daß die Prüfung nur punktuell erfolgt, so daß aus den Meßergebnisen nur bedingt auf den Gesamtzustand des Mastes geschlossen werden kann.

Ein weiteres Verfahren zur Prüfung von stehenden Masten ist aus der DE-A-15 73 752 bekannt. Bei diesem Verfahren findet ein Rahmengestell Verwendung, das an einer um den Mastfuß herumgelegten Schelle angreift und mit einem oberen Eckpunkt gegen den Mast abgestützt wird. An einem äußeren Punkt des Rahmengestelles wird eine Prüfkraft aufgebracht, die bewirkt, daß der freistehende Mastteil gegenüber dem unterirdischen Mastfuß in Höhe der Schelle, also im Regelfall oberhalb des gefährdeten Bereiches abgebogen wird.

Durch die Schelle wird ein künstlicher Knickpunkt geschaffen, der eine Belastung entsprechend den realen Verhältnissen unmöglich macht. Darüberhinaus ist mit diesem Verfahren eine eventuell vorliegende Minderung der Standfestigkeit durch veränderte Bodenbeschaffenheit und/oder geschädigte Fundamentverbindung nicht feststellbar.

Aus der DE-A-37 29 906 ist eine Vorrichtung zum Überprüfen der Standfestigkeit von Grabmalen bekannt, bei der ein mit einem Ausleger versehenes Kleinfahrzeug mit einer Kraftquelle Verwendung findet. Der Ausleger greift mit seinem freien Ende an dem Grabmal an und bringt die von der Kraftquelle erzeugte Prüfkraft auf das Grabmal. Dabei werden die Prüfkraft sowie eine eventuell eintretende Neigung des Grabmales durch eine Meßvorrichtung kontrolliert.

Zur Überprüfung der Stand- und Biegefestigkeit von Masten ist diese Vorrichtung nicht geeignet, da hier lediglich die Standfestigkeit, also in der Regel der Zustand des Sockels oder Fundamentes bzw. die Verbindung zu diesem geprüft wird. Dabei spielt der Zustand des Grabmales als solches keine Rolle. Die Auswertung erfolgt so, daß bei nachlassendem Druck davon ausgegangen wird, daß eine unzureichende Verankerung vorliegt. Wird bei einer solchen Prüfung festgestellt, daß kein Prüfdruck mehr aufgebaut werden kann, so bedeutet dies möglicherweise, daß bereits eine Schädigung des Prüfobjektes durch den Prüfvorgang eingetreten ist.

In der US-A-5 212 654 sind drei Verfahren zum Prüfen der Festigkeit von Masten beschrieben. Bei einem dieser Verfahren wird der Mast mit einer vorher festgelegten Kraft oberhalb des Bodenniveaus belastet. Dann wird die sich ergebende seitliche Auslenkung des Mastes gemessen, die unter dieser vorgegebenen Kraft eintreten wird. Schließlich wird aus dem festen Wert der Kraft und dem variablen Wert der erreichten Auslenkung rechnerisch die Restfestigkeit des Mastes ermittelt. Sonst besteht auch die Möglichkeit, vorab eine seitliche Auslenkung des Mastes festzulegen und den Mast mit einer ansteigenden Kraft oberhalb des Bodenniveaus so lange zu belasten, bis die vorgegebene Mastauslenkung erreicht ist. Die variable Kraft, die zur Erzielung der vorgegebenen Auslenkung notwendig ist, wird gemessen, und aus dem so gewonnenen Kraftmesswert und dem vorbestimmten Wert der Auslenkung wird dann die Restfestigkeit des Mastes rechnerisch ermittelt. Eine weitere alternative Möglichkeit besteht darin, daß vor dem Prüfvorgang die erforderliche Minimalfestigkeit des Mastes rechnerich ermittelt wird. Dann wird der Mast oberhalb des Bodenniveaus mit einer festgelegten, der Minimalfestigkeit entsprechenden Kraft belastet und beobachtet, ob der Mast diese Belastung ohne Schaden übersteht und zutreffendenfalls noch die erforderliche Minimalfestigkeit hat.

Im vorerwähnten Dokument wird auch eine Einrichtung beschrieben, die zur Durchführung dieser drei möglichen Verfahren dienen soll und auch nur hierzu dienen kann und mit einem Rechner ausgestattet ist, mit dem aus der Kraft und der Auslenkung die Restfestigkeit des Mastes berechnet wird, wobei wie bei den drei vorher erwähnten alternativen Verfahren einer der Werte für die Kraft und die Auslenkung jeweils fest vorgegegeben ist und der andere Wert variabel ist und gemessen wird.

Abgesehen davon, daß diese Einrichtung und vorbekannten Verfahren keine Aussage über die Festigkeit des Mastes während des Prüfvorganges ermöglichen, bringen sie auch beträchtliche Risiken mit sich, da der Mast beim Prüfvorgang abknicken oder brechen kann, bevor der vorgegebene Festwert der Kraft oder Auslenkung erreicht ist. Das wurde auch erkannt, wie man anhand der im vorerwähnten Dokument beschriebenen und dargestellten Schutzeinrichtungen ersehen kann, mit denen eine Gefährdung des Bedienungspersonals z. B. bei einem Mastbruch vermieden werden könnte. Solche Schutzeinrichtungen bedingen aber einen relativen hohen Aufwand, und zwar auch im Hinblick auf ihre Anwendung.

Es ist die Aufgabe der Erfindung, ein Prüfverfahren sowie eine auch zur Durchführung dieses Prüfverfahrens und anderer Prüfverfahren geeignete Prüfeinrichtung vorzuschlagen, mit der die Stand- und Biegefestigkeit von Masten einfach, sicher sowie ohne besondere Schutzvorrichtungen und unter Vermeidung einer Schädigung des jeweils geprüften Mastes festgestellt werden kann, und zwar bei exakter Aussage über den Zustand des Mastes auch während des Prüfungsvorganges.

Diese Aufgabe wird bei einem Verfahren der eingangs beschriebenen Art erfindungsgemäß so gelöst, daß sowohl die erwähnte Kraft als auch die Strecke, um die der Mast an einer ausgewählten Stelle aufgrund des Biegemomentes seitlich ausgelenkt wird, zeitgleich mit Sensoren gemessen werden, daß eine lineare Abhängigkeit der erwähnten Strecke von der eingeleiteten Kraft als Aussage für eine im Bereich der elastischen Verformung liegende Mastauslenkung verwertet wird, während die Feststellung einer nicht linearen Abhängigkeit der von den Sensoren gemessenen Werte als Aussage für eine plastische Verformung und/oder für eine nicht stabile Verankerung des dann als nicht biegefest bzw. nicht standfest erkannten Mastes verwertet und der Prüfvorgang durch Entlasten des Mastes abgebrochen wird, und daß anderenfalls der Prüfvorgang durch Entlasten des Mastes erst dann abgebrochen wird, wenn ein vorgegebener Sollwert des Biegemomentes im elastischen Bereich der Verformung des als ausreichend stand- und biegefest erkannten Mastes erreicht ist.

Um trotz üblicherweise unregelmäßig verteilter Schädigungen des Mastes eine Aussage über den Gesamtzustand zu erhalten, kann der Prüfvorgang mehrfach durchgeführt werden, indem die auf den Mast gerichteten Kräfte nacheinander aus verschiedenen Richtungen in den Mast eingeleitet werden.

Eine Schädigung des Mastes durch den Prüfvorgang kann dadurch sicher vermieden werden, daß der Prüfvorgang bei Erreichen des vorgegebenen Sollwertes des Biegemomentes oder bei nichtlinearer Abhängigkeit der Auslenkung von der eingeleiteten Kraft automatisch abgebrochen wird, d. h. unmittelbar bei Beginn einer Beanspruchung, die zu einer Schädigung führen würde.

Zur Durchführung des erfindungsgemäßen oder eines anders ablaufenden Prüfverfahrens ist eine Einrichtung der eingangs beschtiebenen Bauart geeignet, die so weitergebildet ist, daß der Kraftsensor und der Wegsensor mit der Auswerteschaltung derart verbunden sind, daß die von ihnen erzeugten Meßwerte fortlaufend der Auswerteschaltung zugeleitet werden können, und daß die Auswerteschaltung derart ausgestaltet ist, daß mit ihr im Betrieb die vom Kraft- und Wegsensor erzeugten Meßwerte zeitgleich in ihr verarbeitbar und in bezug auf ihre gegenseitige Abhängigkeit optisch darstellbar und gegebenenfalls dokumentierbar sind.

Um eine einfache Handhabung und Anpassung an die standort- und ausführungsbedingten Gegebenheiten der zu prüfenden Masten zu ermöglichen, ist die Einrichtung als mobile Einheit, vorzugsweise in Form eines Fahrzeuges mit einem Ausleger ausgebildet, an dem eine Krafteinheit angeordnet ist. Dabei kann die Ankopplung der Krafteinheit an dem zu prüfenden Mast über eine den Mast umschließende Manschette erfolgen, was erlaubt, wahlweise sowohl Zug- als auch Druckkräfte in den zu prüfenden Mast einzuleiten. Dies ist auch im Hinblick auf die unterschiedlichen örtlichen Gegebenheiten von großem Vorteil.

Die Krafteinheit umfaßt zweckmäßigerweise mindestens einen elektrisch, mechanisch oder hydraulisch betätigbaren Linearantrieb, vorzugsweise Hydraulikzylinder, so daß die Krafteinheit auf einfache Art und Weise mittels einer Fahrzeughydraulik betrieben werden kann, über die auch der Ausleger betätigbar ist.

Die gegen den Mast aufgebrachte Kraft kann über einen als Druckmeßdose ausgebildeten Kraftsensor registriert werden, der unmittelbar in dem Kraftfluß zwischen Krafteinheit und Manschette angeordnet sein kann. Der Verlauf dieses so gewonnenen Meßsignales kann in einer Meßvorrichtung erfaßt und gleichzeitig mit dem Meßsignal des beispielsweise auf der Gegenseite des Kraftangriffes an den Mast angelegten Wegsensores ins Verhältnis gesetzt werden, so daß der Verlauf der gegenseitigen Abhängigkeit beider Meßwerte ausgewertet und gegebenenfalls optisch dargestellt werden kann.

Ein Ausführungsbeispiel einer Einrichtung zur Ausführung des erfindungsgemäßen Verfahrens wird nachstehend anhand der Zeichnung näher erläutert. Es zeigen in schematischer Darstellung
- Fig. 1: eine Ansicht der für einen Prüfvorgang installierten Einrichtung,
- Fig. 2: eine Stirnansicht der Einrichtung nach Fig. 3,
- Fig. 3: einen vergrößerten Ausschnitt aus der Darstellung nach Fig. 1 im Bereich der Krafteinheit,
- Fig. 4: ein Blockschaltbild der Meßvorrichtung.
- Fig. 5: ein Monitorbild des Verlaufes der Mastauslenkung in Abhängigkeit von der Prüflast bei einem in Ordnung befindlichen Mast, und
- Fig. 6: ein Monitorbild entsprechend Fig. 5 bei einem geschädigten Mast.

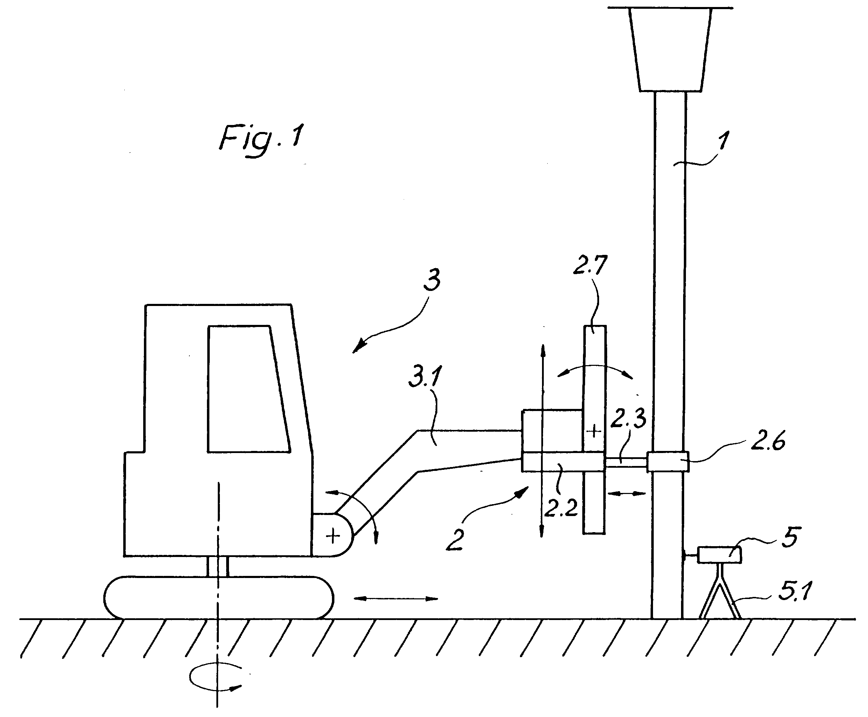

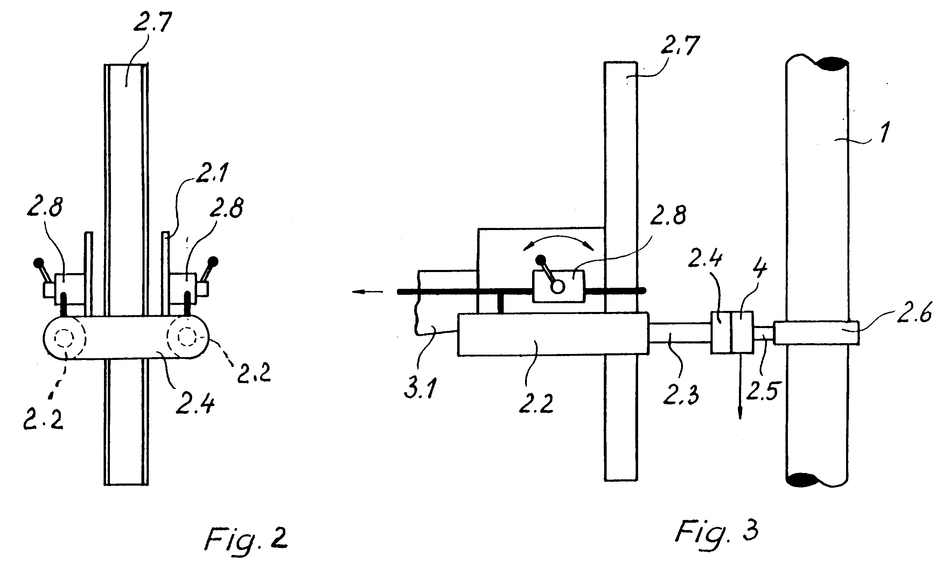

Das Ausführungsbeispiel der erfindungsgemäßen Einrichtung zum Prüfen der Stand- und Biegefestigkeit von Masten 1 besteht, wie aus Fig. 1 ersichtlich, im wesentlichen aus einer an dem freien Ende eines Auslegers 3.1 eines Fahrzeuges 3, hier eines Kompaktbaggers, angeordneten Krafteinheit 2, einem Kraftsensor 4 (Fig. 3) und einem Wegsensor 5.

Die Krafteinheit 2 bildet eine Montageeinheit aus einem an dem Ausleger 3.1 befestigbaren Traggestell 2.1, an dem zwei Hydraulikzylinder 2.2 symmetrisch zur Mittelebene der Montageinheit angebracht sind. Die freien Enden der Kolbenstangen 2.3 sind durch ein Joch 2.4 verbunden, das den Kraftsensor 4, beispielsweise eine Zug-Druck-Meßdose trägt, die über eine Verbindungsstange 2.5 mit einer um den zu prüfenden Mast 1 legbaren Manschette 2.6 verbunden ist. Die Hydraulikzylinder 2.2 sind an einem Schlitten 2.7 befestigt, der deren vertikale Positionsveränderung erlaubt. Aktiviert werden die Hydraulikzylinder 2.2 durch manuell betätigbare hydraulische Feinregler 2.8, die eine Beeinflussung der die Mastauslenkung bewirkenden, hydraulisch erzeugten Kraft durch Steuerung des Druckes ermöglichen. Der Wegsensor 5 ist auf einem Stativ 5.1 in allen Richtungen einstellbar angebracht (Fig. 1).

Zur Prüfung der Stand- und Biegefestigkeit eines Mastes 1 wird der Kompaktbagger 3 mit seinem Ausleger 3.1 voran an den Mast 1 herangefahren und für das Fahrzeug 3 ein sicherer Standort gewählt. Alsdann wird der Ausleger 3.1 mit Hilfe der Fahrzeughydraulik auf die gewünschte Höhe gefahren und an dem Mast 1 die Manschette 2.6 festgelegt. Zwecks Verstellung der an dem Kraftsensor 4 angeordneten Verbindungsstange 2.5 werden nun durch Betätigen eines hydraulischen Feinreglers 2.8 die Hydraulikzylinder 2.2 beaufschlagt, bis die Manschette gegen den Mast zur Anlage kommt. Schließlich wird noch der Wegsensor 5 in Position gebracht, wobei diese so gewählt wird, daß der Wegsensor 5 auf der zur Richtung des Auslegers 3. entgegengesetzten Seite des Mastes 1 zur Anlage kommt.

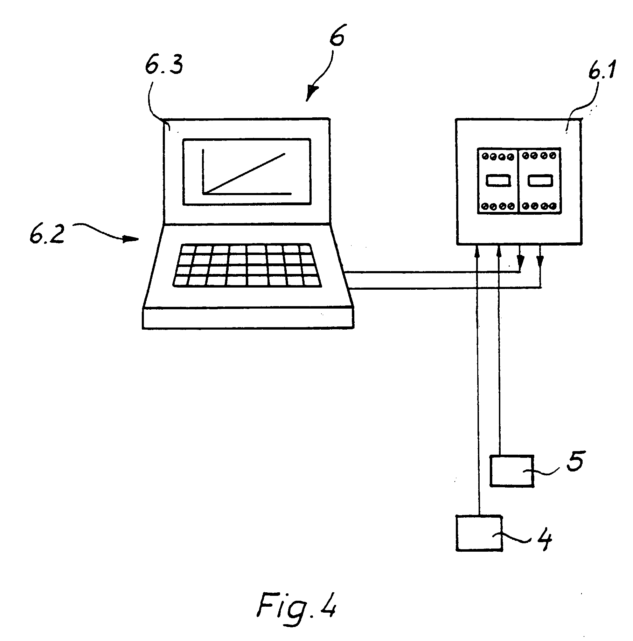

Der Prüfvorgang wird eingeleitet durch erneutes Betätigen des einen hydraulischen Feinreglers 2.8 beispielsweise so, daß die Kolbenstangen 2.3 der Hydraulikzylinder 2.2 ausgefahren werden. Dabei steigt die Schubkraft aufgrund des Widerstandes von seiten des Mastes 1 allmählich an. Einer Meßeinrichtung 6 (Fig. 4) werden die durch den Kraftsensor 4 ermittelten Belastungswerte fortlaufend zugeleitet. Gleichzeitig werden der Meßeinrichtung 6 die sich als Folge der Belastung ergebenden Auslenkwerte des Mastes 1 durch den Wegsensor 5 fortlaufend zugeleitet. Beide Werte werden jeweils über einen Transmitter 6.1 einem Personal-Computer 6.2 zugeführt, der das Verhältnis der beiden augenblicklichen Werte der Prüfkraft und der seitlichen Mastauslenkung bildet und auf einem Monitor 6.3 zur Anzeige bringt, wobei die Auslenkung in Abhängigkeit von der jeweils aufgebrachten Kraft dargestellt wird.

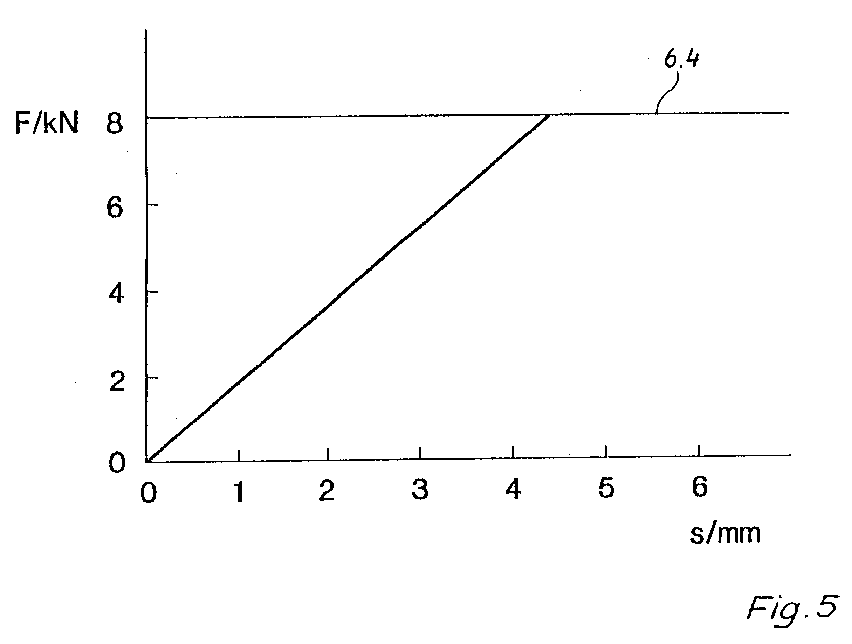

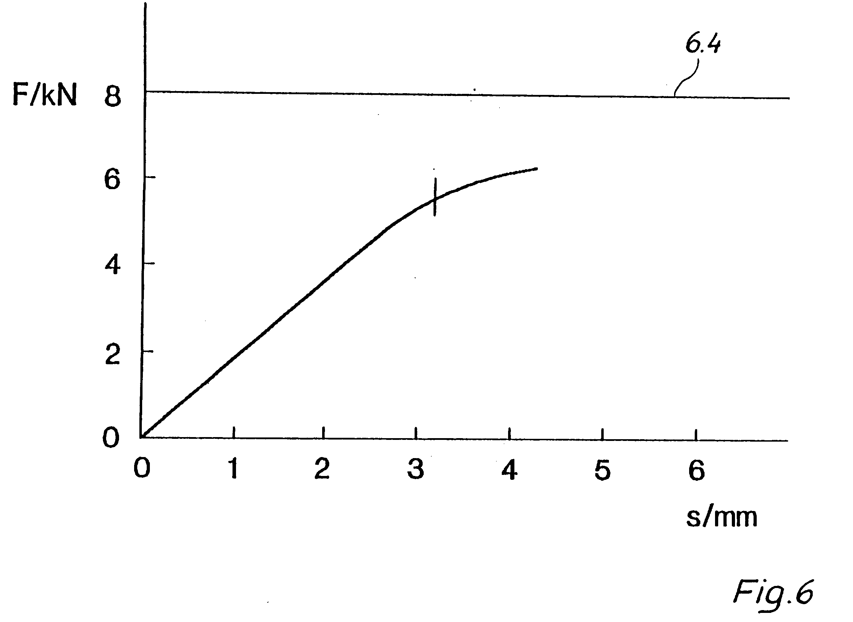

Bei dieser Anzeige kommt es darauf an, wie sich die beiden Werte bis zu einer Sollprüflast zueinander verhalten. Vorzugsweise erfolgt die Anzeige in einem Diagramm entsprechend Fig. 5 und 6, in dem der Belastungswert F auf der Ordinate und der Auslenkwert S auf der Abszisse dargestellt ist. Ein linearer Verlauf des Verhältniswertes dieser beiden Parameter entsprechend Fig. 5 zeigt dabei an, daß sich die Auslenkung des belasteten Mastes 1 im elastischen Bereich vollzieht, woraus gefolgert werden kann, daß der betreffende Mast 1 selbst sowie seine Verankerung in Ordnung sind. Ist dies der Fall, so wird die Prüfung nach Erreichen einer Sollprüflast 6.4 beendet, indem der Mast 1 entlastet wird.

Dies kann automatisch geschehen, indem aus einem Prüfprogramm ein Steuersignal hergeleitet wird, das über ein Schaltventil eine Entlastung der Hydraulikzylinder 2.2 bewirkt. Es kann dann sogleich ein erneuter Prüfvorgang durchgeführt werden, indem die Belastung bei unveränderter Position der Prüfeinrichtung, aber durch Einleiten einer Zugkraft durch Betätigung des anderen Feinreglers 2.8 vorgenommen wird, oder indem der Vorgang aus einer neuen Position wiederholt wird.

Wird vor Erreichen der Sollprüflast 6.4 ein Übergang des Verlaufes des Verhältnisses zwischen Belastungs- und Auslenkwert von einem linearen in einen nichtlinearen Verlauf entsprechend Fig. 6 angezeigt, so liegt eine plastische bzw. nicht mehr biegeelastische Formveränderung des als nicht ausreichend biegefest erkannten Mastes 1 vor. Sonst kann dieses Prüfergebnis auch darauf schließen lassen, daß die Verankerung des Mastes unzureichend ist und der Mast dementsprechend nicht ausreichend standfest ist. In diesem Fall wird ein sofortiger Abbruch des Prüfvorganges durch die Bedienungsperson oder automatisch vom Prüfprogramm herbeigeführt, um ein Knicken oder Kippen des Mastes zu vermeiden.

## Patentansprüche

1. Verfahren zum Prüfen der Stand- und Biegefestigkeit von stehend verankerten Masten (1), bei dem der jeweils zu prüfende Mast (1) einem variablen Biegemoment ausgesetzt wird, indem er mit einer oberhalb seiner Verankerung eingeleiteten und im Verlauf des Prüfvorganges ansteigenden Kraft belastet wird, deren gemessener Wert und Verlauf zur Bestimmung der Festigkeit des Mastes herangezogen werden, dadurch gekennzeichnet, daß sowohl die erwähnte Kraft (F) als auch die Strecke (S), um die der Mast (1) an einer ausgewählten Stelle aufgrund des Biegemomentes seitlich ausgelenkt wird, zeitgleich mit Sensoren (4, 5) gemessen werden, daß eine lineare Abhängigkeit der erwähnten Strecke von der eingeleiteten Kraft als Aussage für eine im Bereich der elastischen Verformung liegende Mastauslenkung verwertet wird, während die Feststellung einer nicht linearen Abhängigkeit der von den Sensoren (4, 5) gemessenen Werte als Aussage für eine plastische Verformung und/oder für eine nicht stabile Verankerung des dann als nicht biegefest bzw. nicht standfest erkannten Mastes (1) verwertet und der Prüfvorgang durch Entlasten des Mastes (1) abgebrochen wird, und daß andern falls der Prüfvorgang durch Entlasten des Mastes erst dann abgebrochen wird, wenn ein vorgegebener Sollwert des Biegemomentes im elastischen Bereich der Verformung des als ausreichend stand- und biegefest erkannten Mastes (1) erreicht ist.

2. Verfahren nach Anspruch 1, dadurch gekennzeichnet, daß der Prüfvorgang mehrfach durchgeführt wird, wobei die auf den Mast (1) gerichteten Kräfte (F) nacheinander aus verschiedenen Richtungen in den Mast eingeleitet werden.

3. Verfahren nach Anspruch 1 oder 2, dadurch gekennzeichnet, daß der Prüfvorgang bei Erreichen des vorgegebenen Sollwertes des Biegemomentes oder bei nicht linearer Abhängigkeit der Auslenkung von der eingeleiteten Kraft automatisch abgebrochen wird.

4. Verfahren nach einem der Ansprüche 1 bis 3, dadurch gekennzeichnet, daß die die Mastauslenkung (S) bewirkende Kraft (F) hydraulisch erzeugt wird.

5. Einrichtung zum Prüfen der Stand- und Biegefestigkeit von stehend verankerten Masten (1), bestehend
- aus einer Krafteinheit (2), mit der eine ansteigende Kraft (F) in den Mast (1) oberhalb seiner Verankerung einleitbar und der Mast (1) mit einem Biegemoment belastbar ist,
- aus einem Kraftsensor (4) zum Messen dieser Kraft, deren Höhe und Verlauf zur Bestimmung der Festigkeit des Mastes (1) auswertbar ist,
- aus einem oberhalb der Mastverankerung gegen den Mast (1) zur Anlage bringbaren Wegsensor (5) zum Messen der aufgrund des Biegemomentes auftretenden seitlichen Auslenkung (S) des Mastes (1),
- und aus einer Auswerteschaltung (6.1, 6.2), insbesondere Einrichtung zur Durchführung des Verfahrens nach einem der Ansprüche 1 bis 4,
dadurch gekennzeichnet, daß
- der Kraftsensor (4) und der Wegsensor (5) mit der Auswerteschaltung (6.1, 6.2) derart verbunden sind, daß die von ihnen erzeugten Meßwerte fortlaufend der Auswerteschaltung (6.1, 6.2) zugeleitet werden können, und daß
- die Auswerteschaltung (6.1, 6.2) derart ausgestaltet ist, daß mit ihr im Betrieb die vom Kraft- und Wegsensor (4 bzw. 5) erzeugten Meßwerte zeitgleich in ihr verarbeitbar und in bezug auf ihre gegenseitige Abhängigkeit optisch darstellbar und gegebenenfalls dokumentierbar sind.

6. Einrichtung nach Anspruch 5, dadurch gekennzeichnet, daß sie als mobile Einheit (3) ausgebildet ist.

7. Einrichtung nach Anspruch 6, dadurch gekennzeichnet, daß die Krafteinheit (2) an einem Ausleger (3.1) eines Fahrzeuges angeordnet ist.

8. Einrichtung nach einem der Ansprüche 5 bis 7, dadurch gekennzeichnet, daß die Krafteinheit (2) an den zu prüfenden Mast (1) über eine den Mast umschließende Manschette (2.6) ankoppelbar ist.

9. Einrichtung nach einem der Ansprüche 5 bis 8, dadurch gekennzeichnet, daß die Krafteinheit (2) mindestens einen Linearantrieb, vorzugsweise einen Hydraulikzylinder (2.2) umfaßt.

10. Einrichtung nach einem der Ansprüche 8 und 9, dadurch gekennzeichnet, daß der Kraftsensor (4) unmittelbar in dem Kraftfluß zwischen Krafteinheit (2) und Manschette (2.6) angeordnet ist.

11. Einrichtung nach einem der Ansprüche 5 bis 10, dadurch gekennzeichnet, daß der Wegsensor (5) auf einem verstellbaren Stativ (5.1) angeordnet ist.

12. Einrichtung nach einem der Ansprüche 5 bis 11, gekennzeichnet durch eine Meßeinrichtung (6, 6.1) zum gleichzeitigen Erfassen der beim Prüfvorgang aufgewendeten Kraft (F) und der dabei entstehenden Mastauslenkung (S) und durch einen Monitor (6.3), auf dem der Verlauf der Abhängigkeit der Mastauslenkung von der Kraft optisch darstellbar ist.

## Claims

1. A method for testing the attachment and bending strength of upright anchored poles (1) in which the pole to be tested in each case is subjected to a variable bending moment in that it is loaded by a force introduced above its anchoring and increasing during the course of the testing procedure and whose measured value and course is used for determining the strength of the pole, characterised in that the mentioned force (F) as well as also the distance (S) about which the pole is laterally deflected at a selected location due to the bending moment are simultaneously measured with sensors (4, 5), that a linear dependence of the mentioned distance on the introduced force is evaluated as an indication for the pole deflection lying in the region of the elastic deformation, whilst the determining of a non-linear dependence of the values measured by the sensors is evaluated as an indication for a plastic deformation and/or for a non-stable anchoring of the pole (1) which is then recognised as not having bending strength or attachment strength and the testing procedure is stopped by unloading the pole (1), and that otherwise the testing procedure is only then stopped by unloading the pole when a predetermined nominal value of the bending moment in the elastic region of the deformation of the pole (1), which is recognised as having adequate attachment and bending strength, is reached.

2. A method according to claim 1, characterised in that the testing procedure is carried out several times, wherein the forces (F) directed onto the pole (1) are introduced after one another from different directions.

3. A method according to claim 1 or 2, characterised in that the testing procedure is automatically interrupted on reaching the predetermined nominal value of the bending moment, or with non-linear dependence of the defelection on the introduced force.

4. A method according to one of claims 1 to 3, characterised in that the force (F) effecting the pole deflection (S) is produced hydraulically.

5. A device for testing the attachment and bending strength of upright anchored poles (1), consisting
- of a force unit (2), with which an increasing force (F) can be introduced into the pole (1) above its anchoring and the pole (1) can be loaded with a bending moment,
- of a force sensor (4) for measuring this force, the amount and course of which able to be evaluated for determining the strength of the pole (1).
- of a distance sensor (5) able to rest against the pole (1) above the pole anchoring for measuring the lateral deflection (S) of the pole (1) occuring due to the bending moment,
- and of an evaluation circuit (6.1, 6.2),
in particular a device for carrying out the method according to one of claims 1 to 4, characterised in that
- the force sensor (4) and the distance sensor (5) are so connected to the evaluation circuit (6.1, 6.2) that the readings produced by them may be continuously fed to the evaluation circuit (6.1, 6.2), and that
- the evaluation circuit (6.1, 6.2) is designed such that with it in operation, the readings produced by the force and distance sensors (4 or 5) can be simultaneously processed in it and with regard to their mutual dependence, can be optically represented and where appropriate documented.

6. A device according to claim 5, characterised in that it is formed as a mobile unit.

7. A device according to claim 6, characterised in that the force unit (2) is arranged on an extension arm (3.1) of a vehicle.

8. A device according to one of claims 5 to 7, characterised in that the force unit (2) can be coupled to the pole (1) to be tested via a collar (2.6) encompassing the pole.

9. A device according to one of claims 5 to 8, characterised in that the force unit (2) comprises at least one linear drive, preferably a hydraulic cylinder (2.2).

10. A device according to one of claims 8 or 9, characterised in that the force sensor (4) is arranged directly in the force flow between the force unit (2) and the collar (2.6).

11. A device according to one of claims 5 to 10, characterised in that the path sensor (5) is arranged on an adjustable stand (5.1).

12. A device according to one of claims 5 to 11, characterised by a measuring device (6, 6.1) for the simultaneous acquisition of the force (F) applied in the testing procedure and of the pole deflection (S) occuring at the same time, and by a monitor (6.3) on which the course of the dependence of the pole deflection on the force can be optically represented.

## Revendications

1. Procédé pour vérifier la stabilité et la résistance à la flexion de poteaux ancrés (1) à l'état dressé, dans lequel le poteau respectif (1) à vérifier est exposé à un moment de flexion variable, dans lequel il est soumis à une charge introduite au-dessus de son ancrage et qui s'accroît au cours du processus de vérification, la valeur mesurée et l'allure de cette force étant utilisées pour déterminer la résistance du poteau, caractérisé en ce qu'on mesure, dans le même temps, avec des capteurs (4, 5), aussi bien la force mentionnée (F) que le tronçon (S) autour duquel le poteau (1) subit une déviation latérale à un endroit sélectionné sur base du moment de flexion, en ce qu'on utilise une dépendance linéaire entre le tronçon mentionné et la force introduite comme information pour une déviation du poteau située dans le domaine de la déformation élastique, tandis qu'on utilise la détermination d'une dépendance non linéaire des valeurs mesurées par les capteurs (4, 5) comme renseignement pour une déformation plastique et/ou pour un ancrage non stable du poteau (1) reconnu comme n'étant pas résistant à la flexion, respectivement comme n'étant pas stable, et on interrompt le processus de vérification en supprimant la charge s'exerçant sur le poteau (1), et en ce que, dans d'autres cas, on interrompt le processus de vérification en supprimant la charge s'exerçant sur le poteau uniquement lorsqu'on a atteint une valeur de consigne prédéfinie du moment de flexion dans le domaine élastique de la déformation du poteau (1) reconnu comme suffisamment stable et manifestant une résistance suffisante à la flexion.

2. Procédé selon la revendication 1, caractérisé en ce qu'on effectue le processus de vérification à plusieurs reprises en introduisant successivement dans le poteau, à partir de différentes directions, les forces (F) orientées vers le poteau (1).

3. Procédé selon la revendication 1 ou 2, caractérisé en ce qu'on interrompt automatiquement le processus de vérification lorsqu'on atteint la valeur de consigne prédéfinie du moment de flexion ou dans le cas d'une dépendance non linéaire entre la déviation et la force introduite.

4. Procédé selon l'une quelconque des revendications 1 à 3, caractérisé en ce qu'on génère par voie hydraulique la force (F) provoquant la déviation (S) du poteau.

5. Mécanisme pour vérifier la stabilité et la résistance à la flexion de poteaux ancrés (1) à l'état dressé, constitué par
- une unité de force (2) avec laquelle on peut introduire une force croissante (F) dans le poteau (1) au-dessus de son ancrage et on peut charger le poteau (1) avec un moment de flexion,
- un capteur de force (4) pour mesurer cette force dont l'intensité et l'allure peuvent être évaluées pour déterminer la stabilité du poteau (1),
- un capteur de déplacement (5) qui peut être amené au-dessus de l'ancrage du poteau contre le poteau (1) pour mesurer la déviation latérale (S) du poteau (1) qui intervient sur base du moment de flexion,
- et un circuit d'évaluation (6.1, 6.2),
en particulier un mécanisme pour la mise en oeuvre du procédé selon l'une quelconque des revendications 1 à 4, caractérisé en ce que
- le capteur de force (4) et le capteur de déplacement (5) sont reliés au circuit d'évaluation (6.1, 6.2) de telle sorte que l'on peut acheminer en continu au circuit d'évaluation (6.1, 6.2) les valeurs de mesure qu'ils génèrent, et en ce que
- le circuit d'évaluation (6.1, 6.2) est réalisé de telle sorte que, lors de sa mise en circuit, les valeurs de mesure générées par les capteurs de force et de déplacement (4, respectivement 5) peuvent y être traitées simultanément et peuvent être représentées du point de vue optique en se référant à leur dépendance mutuelle et, le cas échéant, peuvent être reproduites sur papier.

6. Mécanisme selon la revendication 5, caractérisé en ce qu'il est réalisé sous forme d'une unité mobile (3).

7. Mécanisme selon la revendication 6, caractérisé en ce que l'unité de force (2) est disposée sur un avant-bras (3.1) d'un véhicule automobile.

8. Mécanisme selon l'une quelconque des revendications 5 à 7, caractérisé en ce que l'unité de force (2) peut être accouplée au poteau (1) à vérifier via une manchette (2. 6) entourant le poteau.

9. Mécanisme selon l'une quelconque des revendications 5 à 8, caractérisé en ce que l'unité de force (2) comprend au moins un entraînement linéaire, de préférence un cylindre hydraulique (2.2).

10. Mécanisme selon l'une quelconque des revendications 8 et 9, caractérisé en ce que le capteur de force (4) est disposé immédiatement dans le champ de force entre l'unité de force (2) et la manchette (2.6).

11. Mécanisme selon l'une quelconque des revendications 5 à 10, caractérisé en ce que le capteur de déplacement (5) est disposé sur un trépied déplaçable (5.1).

12. Mécanisme selon l'une quelconque des revendications 5 à 11, caractérisé par un mécanisme de mesure (6, 6.1) pour l'enregistrement simultané de la force (F) utilisée lors du processus de vérification et de la déviation (S) du poteau qui se produit en l'occurrence, et par un moniteur (6.3) sur lequel on peut représenter par voie optique l'allure de la dépendance entre la déviation du poteau et la force.
